# EUROPEAN PATENT SPECIFICATION

(11) **EP 0 618 378 B1**
(45) Date of publication and mention of the grant of the patent: **13.10.1999**
(21) Application number: 93302430.9
(22) Date of filing: 29.03.1993
(51) Int. Cl.: F16D 43/202

(54) **Delay restoring type limit-torque coupling mechanism**
Drehmomentbegrenzender Kupplungsmechanismus mit verzögerter Rückstellung
Mécanisme de limitation du couple pour embrayages à rattrapage retardé

(43) Date of publication of application: 05.10.1994
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Pratt, David Martin

(56) References cited:
- EP-A- 0 489 530
- DE-A- 1 625 842
- FR-A- 470 035
- US-A- 1 725 562
- US-A- 4 884 670

## Description

This invention relates to a torque limiter.

In general, a conventional torque limiter device has a pre-compressed forced reversing mechanism. It is understood that, when such a torque limiter is situated at normal transmission coupling state, i.e. within the scope of normal torque, the loss is extremely small. However, when it is situated at over-torque and is in a relatively sliding state, reversing pressure is formed arising from the precompression of the reversing mechanism, whereby sliding friction loss and noise increases between the forced reversing mechanism and the gyrator.

The aim of the invention is to provide a torque limiter which does not suffer from the disadvantage of this known type of limiter.

The present invention provides a torque limiter comprising a first body defining an indentation in a surface thereof; a second body located adjacent to, and movable relative to, the first body, the second body defining an air chamber having a first end opening towards the first body and a second end defining an air hole; a forced reversing mechanism comprising an element configured to engage the indentation in the first body, a piston attached to the element and slidably located in the air chamber, and biassing means acting on the piston to exert a static pressure on the piston so as to urge the element into the indentation in the first body; characterised by delay means located on the second body so as to act on the piston to delay return of movement of the piston when the element has been disengaged from the indentation.

This torque limiter has a delay restoring function, which is characterised in that, when the relative coupling portion is forced by torque to reverse, the torque limiter mechanism has a delay restoring function to reduce noise and frictional loss arising from subsequent relative sliding, so as to restore coupling during the decrease in torque difference or speed difference. The means to accomplish the aforesaid delay function may comprise a coupling mechanism being forcibly reversed with such characteristics as mechanical friction, damping, fluid damping, magnetic damping or the like.

The invention will now be described in greater detail, by way of example, with reference to the drawings, in which:-
Fig. 1 is a partial perspective view showing a first form of torque limiter;
Fig 1-1 a partial cross-sectional view of the torque limiter of Figure 1;
Fig. 2 is a partial perspective view of a second form of torque limiter;
Fig. 2-1 is a partial cross-sectional view of the torque limiter of Fig. 2;
Fig. 3 is a partial perspective view of a third form of torque limiter.
Fig. 3-1 is a partial top sectional view of the torque limiter of Fig. 3;
Fig. 4 is a partial perspective view of a fourth form of torque limiter; and
Fig. 4-1 is a partial top sectional view of the torque limiter of Fig. 4.

The torque limiters to be described provide the aforesaid forced reversing mechanism with a one-way or bilateral delay by means of a specific delay mechanism, and particularly the one-way is related to the direction of restoring to normal coupling from the over-torque state so as to reduce friction loss during over-torque sliding. This type of torque limiter is characterised in that a restoring delay effect is achieved after over-loaded reversing, so as to reduce friction loss arising from residual coupling torque, and its delay restoring function relies on mechanical friction damping, magnetic damping, or fluid damping produced from specific structure during the displacement travel of a forced reversing element. Owing to a delay effect that reduces restoring displacement and restoring pressure, sliding loss after over-torque is decreased.

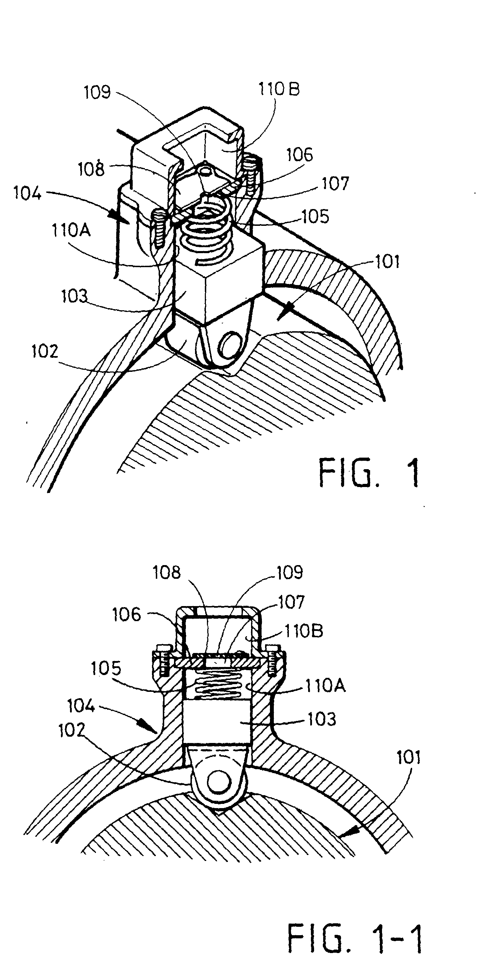

Referring to the drawings, Figs. 1 and 1-1 show a torque limiter having first and second bodies 101 and 104, a forced reversing mechanism 102, and a piston 103. The bodies 101 and 104 are movable relative to one another. The body 101 is provided with a groove or indentation, and the body may resemble a shaft, a conical form or a disc form, and the groove or indentation therein is provided for coupling the forced reversing mechanism 102.

The forced reversing mechanism 102 may be a sliding or rolling device for normally coupling with the groove or indentation in the body 101, when the action of both does not exceed a coupling torque, so that the bodies 101, 104 are engaged in synchronous transmission; and, after it is forcibly reversed, there arises sliding or rolling differential action between the two bodies.

The body 104 has an inner air chamber 110A in which the piston 103 is slidably mounted. The forced reversing mechanism 102 is connected to the piston 103 which slides in the inner air chamber 110A so as to force a fluid. A spring 105 is provided for producing static pressure against the piston 103, and hence against the forced reversing mechanism 102.

A separation wall 106 separates an outer air chamber 110B from the inner air chamber 110A, this wall including a guide hole 107. A one-way reed valve 108 is positioned above the guide hole 107, the one-way reed valve having a guide hole 109 with a smaller bore than that of the guide hole 107.

When the forced reversing mechanism 102 is reversed forcibly, the piston 103 immediately compresses the fluid within the inner air chamber 110A, whereby the fluid swiftly passes through the guide hole 107 to force the one-way reed valve 108 open. When the spring 105 forces the piston 103 to return, as the valve 108 is closed, the fluid within the outer air chamber 110B passes through the smaller guide hole 109 in the valve 108, whereby the fluid flow is damped to delay the piston return. This delay function may reduce the depth and static pressure of the groove coupling/setting with the forced reversing mechanism 102, further decrease friction loss when the two bodies 101 and 104 undergo high speed sliding.

The delay function for the forced reversing mechanism 102 may be accomplished by means of a gas or a liquid, or by mechanical friction, or by magnetic eddy delay effect.

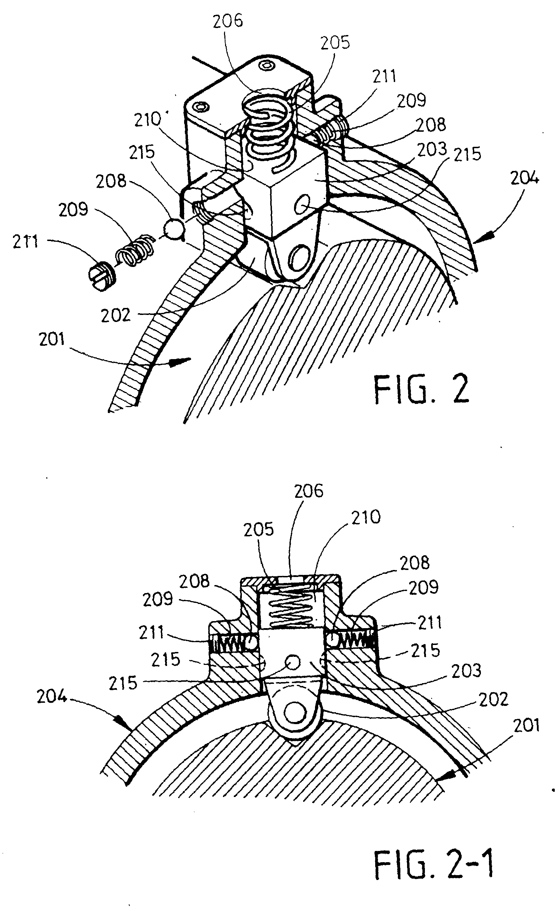

Figs. 2 and 2-1 show a torque limiter having first and second bodies 201 and 204, a forced reversing mechanism 202, and a piston 203. The bodies 201 and 204 are movable relative to one another. The body 201 is provided with a groove or indentation, and the body may resemble a shaft, a conical form or a disc form, and the groove or indentation therein is provided for coupling the forced reversing mechanism 202.

The forced reversing mechanism 202 may be a sliding or rolling device for normally coupling with the groove or indentation in the body 201 when the action of both does not exceed a coupling torque, so that the bodies 201, 204 are engaged in synchronous transmission; and, after it is forcibly reversed, there arises sliding or rolling differential action between the bodies.

The body 204 has an air chamber 210 in which the piston 203 is slidably mounted. The forced reversing mechanism 202 is connected to the piston 203. A spring 205 is provided for producing static pressure against the piston 203 to force the forced reversing mechanism 202 into engagement with the groove or indentation in the body 201 so as to produce a coupling torque. An air hole 206 is provided on the top side of the air chamber 210.

At least one transverse hole is located in the side of the air chamber 210 of the body 204 for incorporating a packing friction block or a ball-type body 208. A packing spring 209 and a packing screw 211 are provided in each transverse hole for packing the sides of the piston 203 so as to delay the return of the piston once it has been displaced to decrease fiction loss on the groove coupling/ setting between the bodies 201 and 204. When the piston 203 is displaced from a coupling state, each packing fiction block or ball-type body 208 may engage with a groove or hole 215 in the piston 203 to delay piston return; and, together with the packing friction blocks or ball-type bodies, to produce a damping force to delay piston return.

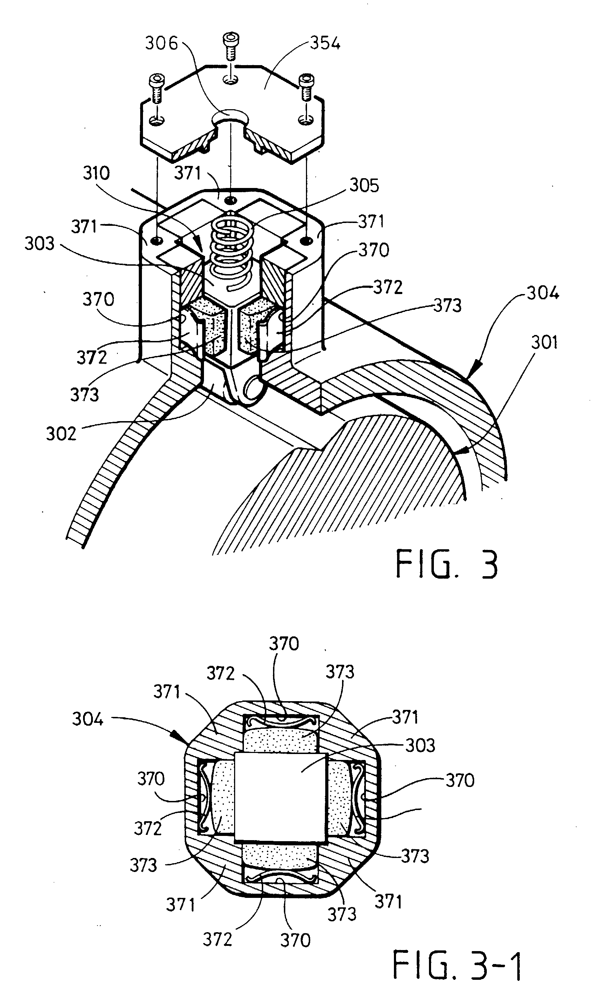

Figs. 3 and 3-1 show a torque limiter having first and second bodies 301 and 304, a forced reversing mechanism 302 and a piston 303. The bodies 301 and 304 are movable relative to be another. The body 301 is provided with a groove or indentation, and the body may resemble a shaft, a conical form or a disc form, and the groove or indentation therein is provided for coupling the forced reversing mechanism 302.

The forced reversing mechanism 302 may be a sliding or rolling device for normally coupling with the groove or indentation in the body 301, when the action of both does not exceed a coupling torque, so that the bodies 301, 304 are engaged in synchronous transmission; and, after it is forcibly reversed, there arises sliding or rolling differential action between the bodies.

The body 304 has an air chamber 310 in which the piston 303 is slidably mounted. The forced reversing mechanism 302 is connected to the piston 303. A spring 305 is provided for producing static pressure against the piston 303 to force the forced reversing mechanism 302 into engagement with the groove or indentation in the body 301. An air hole 306 is provided on the top side of the air chamber 310.

The main body part of the body 304 has recessed portions 370 for inserting side-compression springs 372 between separation posts 371 to force friction blocks 373 against the piston 303 to produce a damping function when the piston is forced to return so as to reduce the depth and static pressure of the groove or indentation coupling/setting with the forced reversing mechanism, and further decreasing friction loss.

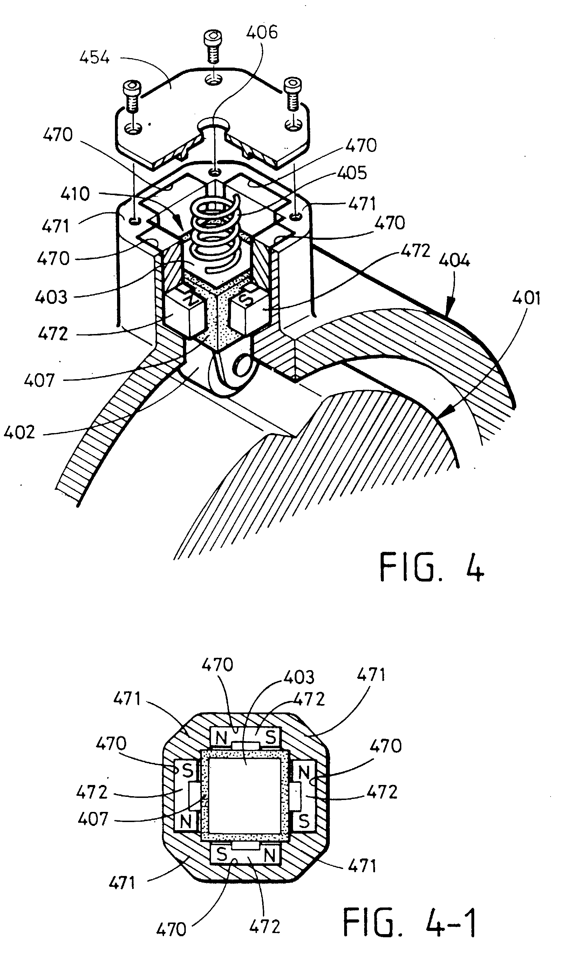

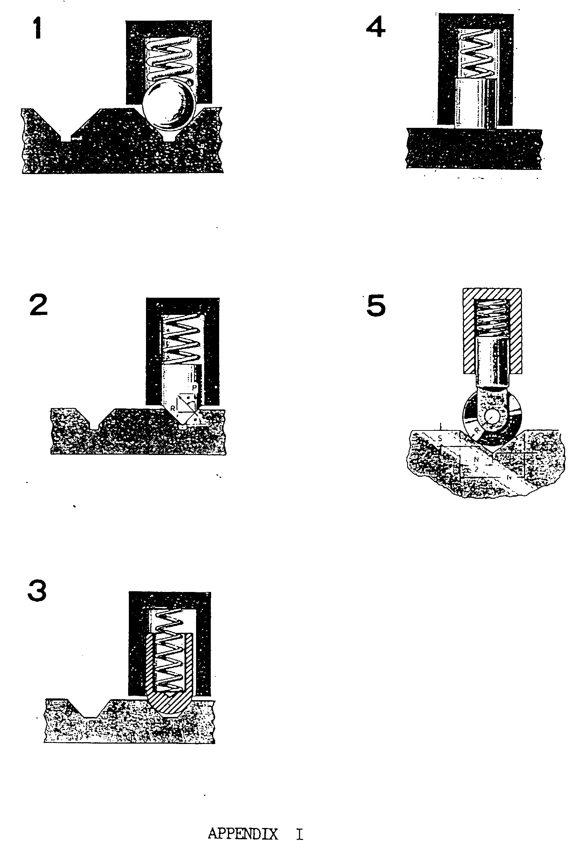

Figs. 4 and 4-1 show a torque limier having first and second bodies 401 and 404, a forced receiving mechanism 402, and a piston 403. The bodies 401 and 404 are movable relative to one another. The body 401 is provided with a groove or indentation, and the body may resemble a shaft, a conical form or a disc form, and the groove or indentation therein is provided for coupling the forced reversing mechanism 402.

The forced reversing mechanism 402 may be a sliding or rolling device for normally coupling with the groove or indentation in the body 401, when the action of both does not exceed a coupling torque so that the bodies 401, 404 are engaged in synchronous transmission; and, after it is forcibly reversed, there arises sliding or rolling differential action between the bodies.

The body 404 has an air chamber 410 in which the piston 403 is slidably mounted. The forced reversing mechanism 402 is connected to the piston 403. A spring 405 is provided for producing static pressure against the piston 403 to force the forced reversing mechanism 402 into engagement with the groove or indentation in the body 401 and to produce a coupling torque. An air hole 406 is provided on the top side of the air chamber 410.

The main part of the body 404 has recessed portions 470 for inserting permanent magnets 472 between separation posts 471.

The piston 403 is enclosed by a ring type eddy current damper 407 (or by a closed net type or railing type conductor) fabricated from a good conductor such as copper or aluminium, for producing eddy current damping to delay the return response when the forced reversing mechanism 402 is forcibly reversed, or the spring 405 is in restoring motion, as well as to reduce the depth and static pressure of the groove or indentation coupling/setting with the forced reversing mechanism, and further decrease friction loss during over-torque sliding.

Each of the embodiments described above includes a single forced reversing mechanism. It will be appreciated, however, that each torque limiter would be provided with a plurality of such forced reversing mechanisms.

## Claims

1. A torque limiter comprising a first body (101, 201, 301, 401) defining an indentation in a surface thereof; a second body (104, 204, 304, 404) located adjacent to, and movable relative to, the first body, the second body defining an air chamber (110A, 210, 310, 410) having a first end opening towards the first body and a second end defining an air hole (107, 207, 307, 407); a forced reversing mechanism comprising an element (102, 202, 302, 402) configured to engage the indentation in the first body, a piston (103, 203, 303, 403) attached to the element and slidably located in the air chamber, and biassing means (105, 205, 305, 405) acting on the piston to exert a static pressure on the piston so as to urge the element into the indentation in the first body; characterised by delay means (108, 208, 308, 408) located on the second body so as to act on the piston to delay return of movement of the piston when the element has been disengaged from the indentation.

2. A torque limiter as claimed in claim 1, wherein the delay means comprises a reed valve (108) located over the air hole (107) so as to allow air flow out of the air chamber (110A) through the air hole, and to restrict air flow into air chamber through the air hole.

3. A torque limiter as claimed in claim 1, wherein the delay means comprises at least one hole defined by the second body (204) , said at least one hole opening into the air chamber (210), a generally spherical member (208) located in said at least one hole, and further biassing means (209) acting on the generally spherical member so as to urge that member against the piston (203).

4. A torque limiter as claimed in claim 3, further comprising a second indentation (215) defined by the piston (203), and located so as to be engageable in the generally spherical member(208).

5. A torque limiter as claimed in claim 1, wherein the delay means comprises at least one notch (470) defined by the second body (404) and opening into the air chamber (410), at least one permanent magnet (472) located in the at least one notch, and a coating of electrically-conducting material (407) on the piston (403) located adjacent to the at least one permanent magnet.

6. A torque limiter as claimed in claim 5, wherein the electrically-conducting material is copper.

7. A torque limiter as claimed in claim 5, wherein the electrically-conducting material is aluminium.

8. A torque limiter as claimed in claim 1, wherein the delay means is constituted by a friction block (37) located in at least one recess (37) opening into the air chamber (310), and by further biassing means (37) acting on the friction block so as to urge the friction block into contact with the piston (303) so as to delay the return movement of the piston when the element has been disengaged from the indentation.

## Patentansprüche

1. Ein Drehmomentbegrenzer, umfassend einen ersten Körper (101, 201, 301, 401), der in einer Oberfläche eine Einkerbung aufweist; einen zweiten Körper (104, 204, 304, 404), benachbart und relativ beweglich zu dem ersten Körper, der eine Luftkammer (110A, 210, 310, 410) aufweist, deren eines Ende sich zu dem ersten Körper hin öffnet und dessen zweites Ende oder Teil ein Luftloch bzw. eine Luftkammer (107, 207, 307, 407) bildet; einen Zwangs-Umkehrmechanismus mit einem Element (102, 202, 302, 402) zum Eingriff in die Einkerbung oder Rille des ersten Körpers; dieses Eingriffselement ist verbunden mit einem Kolben (103, 203, 303, 403), der in der Luftkammer gleitbar ist, und auf den Vorspann-Mittel (105, 205, 305, 405) wirken zur Ausübung eines statischen Vorspann-Druckes auf den Kolben, der das Eingriffselement in die Einkerbung des ersten Körpers zu drücken sucht;
gekennzeichnet durch Verzögerungsmittel (108, 208, 308, 408) die an oder in dem zweiten Körper angebracht sind, zur Wirkung auf den Kolben zur Verzögerung der Rückkehrbewegung des Kolbens und damit des Eingriffselementes, wenn das Eingriffselement sich ausser Eingriff aus der Einkerbung oder Rille befindet.

2. Ein Drehmomentbegrenzer nach Anspruch 1, wobei als Verzögerungsmittel ein Klappenventil oder Rückschlagventil (108) oberhalb des Luftloches (107) vorgesehen ist, um den Ausfluss von Luft aus der Luftkammer (110A) durch dieses Loch zu gestatten, aber das Einfliessen von Luft durch dieses Loch in die Kammer zu drosseln.

3. Ein Drehmomentbegrenzer nach Anspruch 1, wobei als Verzögerungsmittel wenigstens ein Loch oder eine Bohrung in dem zweiten Körper (204) vorgesehen ist, die sich zu der Luftkammer (210) öffnet, und in die ein allgemein sphärischer Teil (208) eingesetzt ist, auf den ein Vorspannmittel (Feder) (209) wirkt, um die Druckkugel (208) gegen den Kolben (203) zu drücken.

4. Ein Drehmomentbegrenzer nach Anspruch 3, wobei der Kolben (203) je eine Ausnehmung (215) aufweist, in welche das sphärische Teil bzw. die Druckkugel (208) in Eingriff gelangt.

5. Ein Drehmomentbegrenzer nach Anspruch 1, wobei die Verzögerungsmittel von wenigstens einer Ausnehmung (470) in dem zweiten Körper (404) gebildet sind, in die ein Permanentmagnet (472) eingesetzt ist, wobei der Kolben (403) gegenüber dem Permanentmagneten (472) mit einer Beschichtung oder Ummantelung aus elektrisch leitendem Material (407) versehen ist.

6. Ein Drehmomentbegrenzer nach Anspruch 5, wobei das elektrisch leitende Material Kupfer ist.

7. Ein Drehmomentbegrenzer nach Anspruch 5, wobei das elektrisch leitende Material Aluminium ist.

8. Ein Drehmomentbegrenzer nach Anspruch 1, wobei die Verzögerungsmittel gebildet sind von wenigstens einem Reibblock (373), der eingesetzt ist in eine Ausnehmung (370) der Innenwand der Luftkammer (310), und auf den eine Vorspann-Feder (372) wirkt, um den Reibblock (373) in Kontakt gegen den Kolben (303) anzudrücken und die Rückkehrbewegung des Kolbens zu verzögern.

## Revendications

1. Limiteur de couple comprenant un premier corps (101, 201, 301, 401) dans la surface duquel est ménagée une encoche ; un second corps (104, 204, 304, 404) adjacent au premier corps par rapport auquel il est mobile, le second corps définissant une seconde chambre à air (110A, 210, 310, 410) comportant une première extrémité s'ouvrant en direction du premier corps et une seconde extrémité comportant un évent (107, 207, 307, 407) ; un mécanisme à inversion forcée comprenant un élément (102, 202, 302, 402) configuré pour s'engager dans l'encoche ménagée dans le premier corps, un piston (103, 203, 303, 403) monté sur l'élément et agencé de façon à coulisser dans la chambre à air, et un moyen de rappel (105, 205, 305, 405) agissant sur le piston pour exercer une pression statique sur le piston de façon à pousser l'élément dans l'encoche ménagée dans le premier corps ; caractérisé par un moyen de retard (108, 208, 308, 408) agencé sur le second corps de façon à agir sur le piston pour retarder le mouvement de retour du piston lorsque l'élément s'est désengagé de l'encoche.

2. Limiteur de couple selon la revendication 1, dans lequel le moyen de retard comprend une soupape à lame souple (108) agencée sur l'évent (107) de façon à permettre l'écoulement d'air hors de la chambre à air (110A) par l'évent, et à diminuer l'écoulement d'air dans la chambre à air par l'évent.

3. Limiteur de couple selon la revendication 1, dans lequel le moyen à retard comprend au moins un orifice ménagé dans le second corps (204), un élément de forme générale sphérique (208) agencé dans ledit au moins un orifice, et en outre un moyen de rappel (209) agissant sur l'élément de forme générale sphérique de façon à pousser cet élément contre le piston (203).

4. Limiteur de couple selon la revendication 3, comprenant en outre une seconde encoche (215) ménagée dans le piston (203) et agencée de façon à pouvoir s'engager dans l'élément de forme générale sphérique (208).

5. Limiteur de couple selon la revendication 1, dans lequel le moyen à retard comprend au moins une encoche (470 ménagée dans le second corps (404) et s'ouvrant dans la chambre à air (410), au moins un aimant permanent (472) agencé dans au moins une encoche (407) ménagée dans le piston (403) adjacente à au moins un aimant permanent.

6. Limiteur de couple selon la revendication 5, dans lequel le matériau électroconducteur est le cuivre.

7. Limiteur de couple selon la revendication 5, dans lequel le matériau électroconducteur est l'aluminium.

8. Limiteur de couple selon la revendication 1, dans lequel le moyen de retard est constitué par un bloc de frottement (373) agencé dans au moins un évidement (370) s'ouvrant dans la chambre à air (310), et en outre un moyen de rappel (372) agissant sur le bloc de frottement de façon à pousser le bloc de frottement pour qu'il vienne en contact avec le piston (303) en vue de retarder le mouvement de retour du piston lorsque l'élément s'est désengagé de l'encoche.
